# EUROPEAN PATENT SPECIFICATION

(11) **EP 0 408 164 B1**
(45) Date of publication and mention of the grant of the patent: **22.06.1994**
(21) Application number: 90300075.0
(22) Date of filing: 04.01.1990
(51) Int. Cl.: A23P 1/08, A23L 1/31, A23L 1/325

(54) **Food transfer sheet**
Nahrungsmittelüberführungsfolie
Feuille de transfert pour aliment

(30) Priority: 11.07.1989 JP 82043/89 U
(43) Date of publication of application: 16.01.1991
(73) Proprietor: OSAKA KAGAKU GOKIN CO., LTD., Amagasaki Hyogo, 660 (JP)
(72) Inventor: Ito, Tomio, Mino Osaka 562 (JP); Nomi, Tomoyoshi, Kobe Hyogo 655 (JP)
(74) Representative: Calderbank, Thomas Roger

(56) References cited:
- EP-A- 0 011 402
- EP-A- 0 269 460
- FR-A- 2 539 588
- US-A- 2 860 990

## Description

The present invention relates to a food transfer sheet. In particular the present invention relates to a food transfer sheet for use in spice or flavouring formed food such as ham, roasted ham, sausages, cheese, Kamaboko (boiled fish paste) and so on.

The manufacture of food products covered or topped with spices in the manner of icing, such as surface-flavored animal or fish meat products, generally requires complicated procedures such as filling a salted or otherwise seasoned raw meat material into a fibrous casing, freezing it to shape, peeling off the casing, applying a spice or spices to the surface of the content, wrapping the content again in cellophan, putting it in a retainer, and cooking it. However, this process is disadvantageous in that most of the steps involved cannot be mechanized but must rely on manual labor, thus increasing the cost of production.

An alternative known procedure comprises filling a seasoned raw meat material into a fibrous casing, cooking it, peeling off the casing, applying a gelatin size or glue and, then, dusting a spice powder. This process is even poorer in workability than the first-described process. In the field of gourmet foods, the product manufactured by covering a lump of cheese or Kamaboko, for instance, with a sheet of milled fish meat is known but the production process essentially comprises covering a pre-molded article of cheese or the like with a separately prepared sheet of milled fish meat paste or the like and, as such, requires much time and labor. Furthermore, the bonding affinity between the substrate food and the covering food material is not so good that the exfoliation problem is liable to occur.

EP 269460 discloses a body of edible material wrapped by an inner layer of basting and/or flavouring material and an outer layer of collagen film.

The present invention seeks to provide a food transfer sheet which ameliorates any of the above or other problems. The present invention also seeks to provide a food transfer sheet with which the spicing or flavouring operation in the manufacture of ham, sausages, gourmet foods, etc. can be remarkably curtailed.

In order that the present invention is more clearly understood an embodiment will be described in more detail by way of example only and with reference to the drawings in which:
Fig. 1 is a generally sectional elevation view showing the food transfer sheet according to the present invention; and
Fig. 2 is a perspective view showing the same sheet rolled into a generally cylindrical form for the production of roasted ham.

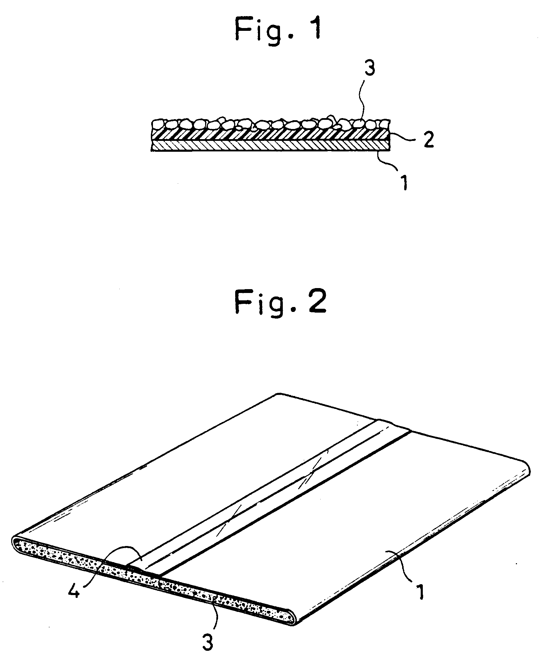

The food transfer sheet according to the present invention comprises a water and heat resistant matrix web and a food material layer in the form of powder, granules and/or chips disposed on said matrix web with a size layer which comprises an edible water-soluble high molecular weight material interposed between said matrix web and food material layer. The present invention relates also to a method of manufacturing a processed meal product according to claim 7. As illustrated in Fig. 1, the food transfer sheet according to the present invention is produced by depositing a size solution on a water-resistant matrix web1 to provide a size layer 2 and, then, superimposing a food material layer 3 on the size layer.

The food transfer sheet according to the present invention is described in detail below.

### ( i ) Water-resistant matrix web

The water-resistant matrix web as the term is used in this specification and the appended claims includes, but is by no means limited to, films and sheets formed from natural fibrous materials such as plant fibers, animal fibers and mineral fibers, artificial fiber materials such as polymers of cellulose and other natural materials (viscose, acetate, etc.), synthetic fibers (polyester, nylon, etc.) and so on, whether by the papermaking technique or the nonwoven fabric production technology, tubular or planar web products of synthetic resins such as polyethylene, polypropylene, polyethylene terephthalate, etc. as manufactured by the extrusion, inflation or other molding technology, thin webs manufactured by compressing foams of said synthetic resins.

The matrix web of the food transfer sheet should be resistant to water and heat to the extent that it will not melt or collapse under the conditions of food manufacture. Furthermore, because this food transfer sheet is used in food industry, the matrix should not be toxic or give off a foreign odor. Thirdly, it is desirable that the following requirements A or B are fulfilled. (A): The matrix need not necessarily be permeable to air but when the substrate food is a material having a high water content, such as raw meat, the matrix web preferably has micropores, i.e. a sufficient degree of porosity to release the water vapor evolved in the course of cooking or sterilization. (B): In contrast, when the substrate food is comparatively lean in water and melts at a temperature not exceeding 60 to 70°C, such as processed cheese, the matrix web is preferably non-porous in order that decreases in product yield may be avoided. As an example of the commercially available matrix web meeting the first-mentioned requirement A, TOKKASHI® (manufactured by Towa Kako K.K.), a viscose-coated Manilla paper, can be mentioned.

On the other hand, nontoxic, heat-resistant films, represented by polyethylene terephthalate film, as such meet the second requirement (B) and, when perforated by needling, corona discharge or the like, meet the first requirement (A).

### ( ii ) Food layer

The food transfer sheet according to the present invention is characterized in that a food material layer is disposed on the matrix web described above through an interposed size layer. This food layer is transferred onto the surface of a substrate food in the course of production of the food. Therefore, the term 'food layer' as used herein may be in any optional form, such as powders, chips, etc., according to the desired kind of product food. Thus, representative examples of the food layer include layers of powdered herbs or spices such as sage, thyme, mace, nutmeg, ginger, pepper, Chinese pepper, siso, horseraddish, etc., chips or powders of sea foods such as various seaweeds or milled fish meat, fish eggs and powders thereof such as tarako (herring roe), etc., powders of dairy foods such as Parmesan cheese, yoghourt, etc..

### ( iii ) Size layer

The size or glue to be used in accordance with the present invention can be selected from a broad range of edible water-soluble high molecular weight materials which are acceptable as food additives. Preferred sizes include natural polysaccharides such as starch, modified starch, dextran, guar gum, tragacanth gum, xanthane gum, arabic gum, pullulan, etc., and synthetic sizes such as carboxymethylcellulose sodium, carboxymethyl-starch and so on. Gelatin may also be utilized for this purpose. What is required of such sizes is that the bond between the food material and matrix web is weakened by processing moisture to let the food layer be neatly transferred onto the surface of the substrate food.

### ( iv ) Production method

The process for production of the food transfer sheet according to the present invention essentially comprises applying a solution of said size to a continuous matrix web, then applying the food layer material in a powdery, granular or chip form, onto the thus-sized web by dusting or otherwise, passing the web over a transfer roll to provide an integral sheet and finally drying the sheet under forced drying conditions, for example by means of a hot blast of air and/or infrared radiation. Preferably, the food layer material is uniformly deposited on the sized matrix web.

While the food transfer sheet of the invention may be planar or tubular, it is preferably tubular for the production of ham, sausages, bar Kamaboko (boiled fish paste bars), bar cheese and so on. The transfer sheet of the invention in a tubular form can be advantageously fabricated by heat sealing a heat-sealable film or by jointing edges of a non-heat-sealable film with the aid of an adhesive tape.

### ( v ) Manufacture of processed foods

It is very simple and easy to manufacture flavored ham, sausages, cheese and other products using the food transfer sheet of the present invention and the present invention contributes remarkably to curtailing the conventional production processes for the respective food products. Taking the manufacture of roasted ham, which is one of the chief uses for the food transfer sheet of the invention, as an example, the process merely comprises filling a seasoned raw meat material into a tubular food transfer sheet of the invention, placing it in a retainer or a meat net, cooking the same, and finally peeling off the food transfer sheet. Thus, the steps of spice coating, cellophan wrapping, etc. which have heretofore been required can be completely dispensed with.

Similarly, for the manufacture of "cheese wrapped in boiled fish paste", the tubular food transfer sheet carrying a boiled fish paste layer according to the invention is set in a retainer and a molten process cheese is poured into the tube. After sterilization by further heating if necessary, the filled tube is cooled for the coagulation of cheese and finally the sheet is peeled off.

For the manufacture of Kamaboko carrying an assorted gourmet spice layer on the surface, a boiled fish paste prior to the outset of shape-retaining gel consistency is filled into a tubular food transfer sheet carrying a gourmet spice layer (for example, a Parmesan cheese layer) on its inner surface and the filled tube is heated for complete gelation.

While the food transfer sheet according to the present invention in dry condition is an integral assemblage of the water-resistant matrix web and the food layer as bonded by the sizing agent, the bond between the matrix and food layer is weakened under wet or moist conditions. Therefore, when the sheet is brought into contact with a wet substrate food, the food material is transferred from the matrix to the substrate food, thus effectively flavoring or spicing the latter.

It is, apparent, from the foregoing description that the food transfer sheet of the present invetion provides a novel method for spicing or flavoring a broad variety of food substrates, represented by ham, sausage, etc. and contributes remarkably to the economical production of processed foods.

It should be understood that the food transfer sheet according to the present invention may be used for purposes of decorating foods as well.

The following examples are further illustrative, but by no means limitative, of the present invention.

### Example 1

While a roll of polyethylene terephthalate film (25 »m thick and 300 mm wide) was paid out continuously by roller means, a 25% aqueous solution of pullulan was deposited on the continuous film at a rate of 40 g/m² by means of a coater. Then, immediately using a duster, 150 g/m² of dry disintegrated herring roe was deposited on the pullulan layer. The web of film carrying this food layer on top of the pullulan layer was passed over a pair of hot rollers heated at about 100°C to fix the herring roe layer. This film was further passed through a hot-air drier at 120°C for further drying and finally taken up on a takeup roll. The resulting food transfer sheet was folded into a tube with the matrix side out as illustrated in Fig. 2 and the joint was secured with an adhesive tape 4 to give a tubular casing.

### Example 2

While a roll of nonwoven polyester fabric (50 g/m², 0.5 mm thick and 300 mm wide) was paid out continuously by feed rollers, it was cut to 1-meter lengths with a rotary cutter. In a predetermined position on a conveyer, each nonwoven fabric was coated with a 30% aqueous solution of pulluran at a rate of 30 g/m² by a silk screening system. Immediately, using a duster, cheese granules were dusted over the sized matrix at a rate of 70 g/m² and the matrix fabric carrying this cheese layer was passed through a hot press to fix the cheese granules and further through an infrared heating chamber for drying.

### Example 3

While a roll of Tokkashi (described hereinbefore) No.40W (305 mm wide) was paid out by means of feed rollers, a 12% aqueous solution of pullulan was deposited on the matrix web with a coater at a rate of 125 g/m². Then, using a duster, 200 g/m² of a spice mixture of pepper, parsly and garlic was dusted on the sized matrix, leaving a gluing margin of 20 mm from one edge. The web was then passed over a pair of hot rollers at about 100°C to fix the spice layer and further through a hot-air drying chamber at 120°C for drying. The resulting sheet was folded the matrix side out, then formed into a tube over a roll and joined with an adhesive tape 4 to give a cylindrical casing.

### Example 4 (manufacture of ham)

A meat net was sleeved over a cylindrical casing (100 mm in diameter, 300 mm long) carrying a pepper layer on its inner surface as prepared in Example 3 and 300 g of seasoned pork for ham was filled into the casing. After both ends of the filled casing were clipped, it was put in a smoke house for a series of processing steps of drying, smoking, steaming and drying. The respective processing conditions were as follows.

| Conditions | Process | | | |
|---|---|---|---|---|
| | Drying | Smoking | Steaming | Drying |
| Internal temperature of the smoke house (°C) | 80 | 80 | 85 | 50 |
| Treating time | 20 | 20 | 60 | 5 |

After the above cooking series, the product was allowed to stand in a refrigerator overnight and the outer cladding was removed. The above procedure provided a pepper-spiced ham.

## Claims

1. A food transfer sheet which comprises
a water and heat resistant matrix web (1);
a layer of food material (3) in the form of powder, granules and/or chips for applying to the surface of the food substrate; and
interposed between said matrix web (1) and food material layer, a size layer (2) which comprises an edible water-soluble high molecular weight material.

2. The food transfer sheet of claim 1 wherein said matrix web (1) is permeable to air.

3. The food transfer sheet of claim 1 or claim 2 wherein said matrix web (1) is a viscose-coated sheet of Manilla hemp.

4. The food transfer sheet of any one of claims 1, 2 or 3 wherein said size (2) is a natural polysaccharide.

5. The food transfer sheet of any one of claims 1, 2, 3 or 4 wherein said food material (3) is a spice composition.

6. The food transfer sheet of any one of the preceding claims wherein said water-resistant matrix web (1) is in the form of a tube which can be easily cut open.

7. A method of manufacturing a processed meat product which comprises the steps of
covering a seasoned food substrate with a food transfer sheet according to any one of the preceding claims;
subjecting the covered food substrate to heat treatment; and
removing the matrix web from the food substrate.

8. The method of claim 7 wherein said seasoned substrate food is based on a poultry, animal or fish meat.

## Patentansprüche

1. Nahrungsmittelüberführungsfolie, umfassend
ein wasser- und hitzebeständiges Matrixgewebe (1);
eine Schicht aus Nahrungsmittelmaterial (3) in Form von Pulver, Granulat und/oder Stücken zum Aufbringen auf die Oberfläche des Nahrungsmittelsubstrats; und
zwischen dem Matrixgewebe (1) und der Schicht aus einem Nahrungsmittelmaterial eine Leimschicht (2), die ein eßbares, wasserlösliches Material mit hohem Molekulargewicht umfaßt.

2. Nahrungsmittelüberführungsfolie nach Anspruch 1, wobei das Matrixgewebe (1) luftdurchlässig ist.

3. Nahrungsmittelüberführungsfolie nach Anspruch 1 oder Anspruch 2, wobei das Matrixgewebe (1) eine mit Viskose überzogene Folie aus Manillahanf ist.

4. Nahrungsmittelüberführungsfolie nach einem der Ansprüche 1, 2 oder 3, wobei der Leim (2) ein natürliches Polysaccharid ist.

5. Nahrungsmittelüberführungsfolie nach einem der Ansprüche 1, 2, 3 oder 4, wobei das Nahrungsmittelmaterial (3) eine Gewürzzusammensetzung ist.

6. Nahrungsmittelüberführungsfolie nach einem der vorstehenden Ansprüche, wobei das wasserbeständige Matrixgewebe (1) in der Form eines Schlauchs vorliegt, der leicht aufgeschnitten werden kann.

7. Verfahren zur Herstellung eines verarbeiteten Fleischprodukts, umfassend die Stufen
Überziehen eines gewürzten Nahrungsmittelsubstrats mit einer Nahrungsmittelüberführungsfolie nach einem der vorstehenden Ansprüche;
Hitzebehandlung des überzogenen Nahrungsmittelmaterials; und Entfernen des Matrixgewebes von dem Nahrungsmittelsubstrat.

8. Verfahren nach Anspruch 7, wobei das gewürzte Nahrungsmittelsubstrat auf einem Geflügel-, Tier- oder Fischfleisch basiert.

## Revendications

1. Feuille de transfert d'aliment qui comprend
une nappe formant matrice (1) résistante à l'eau et à la chaleur ;
une couche de produit alimentaire (3) sous forme de poudre, de granulés et/ou de copeaux destinée à l'application à la surface du substrat alimentaire ; et
interposée entre ladite nappe formant matrice (1) et la couche de produit alimentaire, une couche de produit d'encollage (2) qui comporte une matière comestible de poids moléculaire élevé soluble dans l'eau.

2. Feuille de transfert d'aliment selon la revendication 1, dans laquelle ladite nappe formant matrice (1) est perméable à l'air.

3. Feuille de transfert d'aliment selon la revendication 1 ou la revendication 2, dans laquelle ladite nappe formant matrice (1) est une feuille de chanvre de Manille recouverte de viscose.

4. Feuille de transfert d'aliment selon l'une quelconque des revendications 1, 2 ou 3, dans laquelle ledit produit d'encollage (2) est un polysaccharide naturel.

5. Feuille de transfert d'aliment selon l'une quelconque des revendications 1, 2, 3 ou 4, dans laquelle ledit produit alimentaire (3) est une composition d'épices.

6. Feuille de transfert d'aliment selon l'une quelconque des revendications précédentes, dans laquelle ladite nappe formant matrice (1) résistante à l'eau est sous forme d'un tube qui peut être coupé et ouvert facilement.

7. Procédé de fabrication d'un produit alimentaire cuisiné industriellement qui comporte les étapes de
couverture d'un substrat alimentaire assaisonné avec une feuille de transfert d'aliment selon l'une quelconque des revendications précédentes ;
exposition du substrat alimentaire recouvert au traitement par la chaleur ; et
extrait de la nappe formant matrice du substrat alimentaire.

8. Procédé selon la revendication 7, dans lequel ledit substrat alimentaire assaisonné est à base de volaille, animal ou poisson.
